Europäisches Patentamt

European Patent Office

Office européen des brevets

(11) Veröffentlichungsnummer : **0 428 194 B1**

(12) # EUROPÄISCHE PATENTSCHRIFT

(45) Veröffentlichungstag der Patentschrift :
**19.01.94 Patentblatt 94/03**

(51) Int. Cl.$^5$ : **C22B 3/08**

(21) Anmeldenummer : **90202618.6**

(22) Anmeldetag : **02.10.90**

(54) Verfahren zur Aufarbeitung von Jarosit-haltigen Rückständen.

(30) Priorität : **24.10.89 DE 3935362**

(43) Veröffentlichungstag der Anmeldung :
**22.05.91 Patentblatt 91/21**

(45) Bekanntmachung des Hinweises auf die
Patenterteilung :
**19.01.94 Patentblatt 94/03**

(84) Benannte Vertragsstaaten :
**BE DE ES FR IT NL**

(56) Entgegenhaltungen :
**EP-A- 0 065 815**
**EP-A- 0 096 499**
**EP-A- 0 100 237**
**FR-A- 1 492 518**
**GB-A- 2 114 966**

(73) Patentinhaber : **RUHR-ZINK GMBH**
**Wittener Strasse 1**
**D-45711 Datteln (DE)**

(72) Erfinder : **von Röpenack, Adolf, Dr.**
**Hermannstrasse 31**
**W-4354 Datteln (DE)**
Erfinder : **Böhmer, Winfried, Dr.**
**Hermannstrasse 25**
**W-4354 Datteln (DE)**
Erfinder : **Grimm, Heiner, Dr.**
**Richard-Wagner-Strasse 29**
**W-4353 Oer-Erkenschwick (DE)**

(74) Vertreter : **Rieger, Harald, Dr.**
**Reuterweg 14**
**D-60323 Frankfurt (DE)**

EP 0 428 194 B1

Jouve, 18, rue Saint-Denis, 75001 PARIS

EP 0 428 194 B1

## Beschreibung

Die Erfindung betrifft ein Verfahren zur Aufarbeitung von Jarosit-haltigen Rückständen, wobei die Rückstände in schwefelsaurem Medium unter erhöhter Temperatur und erhöhtem Druck behandelt werden.

Bei der hydrometallurgischen Zinkgewinnung aus Zinkkonzentraten geht das in den Zinkkonzentraten bzw. der Röstblende enthaltene Eisen in den einzelnen Laugungsstufen in Lösung. In der Röstblende liegt Eisen zum größten Teil in Form von Zink-Ferrit ($ZnFe_2O_4$) vor. Diese Verbindung wird üblicherweise durch eine heiße saure Laugung in Lösung gebracht, um das darin enthaltene Zink gewinnen zu können. Die Lösung der heißen sauren Laugungsstufe enthält im allgemeinen 10 bis 30 g/l Eisen neben Zinkgehalten, die zwischen 70 und 100 g/l liegen. Das gelöste Eisen muß vor der elektrolytischen Zinkgewinnung aus der Zinklösung entfernt werden. Bei den meisten Zinkelektrolysen wird das Eisen aus der Lösung als Jarosit $MeFe_3(OH)_6(SO_4)_2$ abgetrennt, wobei Me = Na, K, Pb, Ag, $NH_4$ oder $H_3O$ sein kann. Nur wenige Zinkelektrolysen trennen Eisen in Form von Hämatit $Fe_2O_3$ oder Goethit $\alpha$-FeO(OH) ab.

Die Jarosit-Fällung ist zwar einfach und kostengünstig durchzuführen, sie führt aber zu großen Umweltproblemen. Der beim Zinkgewinnungsprozeß anfallende Jarosit enthält im allgemeinen nur 25 bis 30 % Eisen neben entsprechenden Gehalten an Sulfat-, Alkali-, Blei- und/oder anderen Verbindungen. Der Jarosit ist deshalb als Eisenrohstoff nicht brauchbar und muß deponiert werden. Bei einer Zinkelektrolyse mit einer Jahresproduktion von 120 000 t Zink fallen pro Jahr etwa 100 000 t Jarosit als Schlamm an, die in grundwassergeschützten Becken oder anderen Einrichtungen abgelagert werden müssen. Der Jarosit ist wegen seines Gehaltes an Pb und Cd, die aus den Zinkkonzentraten stammen, umweltschädlich und wegen der stets vorhandenen Anteile an wasserlöslichen Salzen, vorwiegend Zinksulfat, auch grundwassergefährdend. Die Abtrennung des Eisens als Goethit löst das Deponieproblem nicht, jedoch ist die zu deponierende Schlamm-Menge etwas geringer, da der Eisengehalt im Goethit mit etwa 40 bis 43 % höher als in Jarosit liegt. Lediglich bei der Fällung des Eisens nach dem Hämatit-Verfahren wird das Eisen in Form eines etwa 60 % Fe enthaltenden Eisenoxids abgetrennt, das beispielsweise in der Zementindustrie eingesetzt werden kann und nach weiterer Reinigung auch als Rohstoff in der Stahlindustrie, so daß dieser Rückstand nicht in eine Deponie abgelagert werden muß.

Die Aufarbeitung des bei der hydrometallurgischen Zinkgewinnung anfallenden Jarosits oder schon deponierter Jarosit-Schlämme zwecks Gewinnung höherer eisenhaltiger Verbindungen, die in anderen Industriezweigen verwertet werden können, ist auf verschiedene Weise versucht worden.

So ist es bekannt, Jarosit durch thermische Behandlung bei Temperaturen über 700°C in Hämatit überzuführen (Metallurgical Transactions B, Vol. 10 B, September 1979, Seiten 439-446). Dabei wird $SO_2$ freigesetzt. Die im Jarosit enthaltenen NE-Metalle verbleiben im Hämatit. Dieser Prozeß erfordert wegen der notwendigen hohen Temperatur einen hohen Einsatz an Energie.

Aus Metallurgical Transactions B, Vol. 10 B, September 1979, Seiten 439-446, ist es auch bekannt, daß Ammonium-Jarosit in wäßriger Lösung durch Zugabe von $NH_3$ bei Temperaturen über 50°C zu Hämatit und Ammoniumsulfat umgesetzt wird, und daß bei einer Temperatur über 100°C ein kristalliner, filtrierbarer Hämatit erzeugt wird. Das Ammoniumsulfat kann aus der Lösung durch Kristallisation gewonnen werden. Das im Jarosit enthaltene Blei geht in den Hämatit. Da das im Hämatit enthaltene Zink in Lösung geht, muß diese aufgearbeitet werden. Da für die Ammonium-Jarositbildung weniger Ammoniak erforderlich ist als für die Umwandlung des Jarosits in Hämatit, kann nur ein Teil des anfallenden Ammoniumsulfats in die Jarosit-Fällung zurückgeführt werden. Dieses Verfahren ist durch den hohen Ammoniakverbrauch und die energetisch aufwendige Kristallisation des Ammoniumsulfats sehr teuer. Außerdem beschreibt dieses Verfahren nur die Umsetzung von reinem Ammonium-Jarosit, der bei der Jarosit-Fällung praktisch nicht anfällt, und nicht die Umsetzung von Misch-Jarositen und Alkali-Jarositen.

Aus der DE-AS 24 02 768 ist es bekannt, Jarosit in schwach saurem Medium zu suspendieren und bei Temperaturen von 220 bis 250°C im Autoklaven in Hämatit umzuwandeln, wobei der Stabilitätsbereich von Hämatit im System $Fe_2O_3$-$SO_3$-$H_2O$ nicht verlassen wird. Da der bei der hydrometallurgischen Zinkgewinnung anfallende Jarosit im allgemeinen nicht rein ist, sondern nicht unbeträchtliche Verunreinigungen wie Blei-Sulfat, Gips, Kieselsäureverbindungen usw. enthält, ist die Qualität des so hergestellten Hämatits für die Weiterverarbeitung in anderen Industriezweigen ungeeignet. Außerdem werden für die hohen Temperaturen bzw. Drücke ausgelegte Autoklaven benötigt.

Der Erfindung liegt die Aufgabe zugrunde, Jarosit-haltige Rückstände in möglichst wirtschaftlicher Weise aufzuarbeiten und dabei einen Rückstand zu erzeugen, welcher direkt einer Weiterverwendung zugeführt werden kann und nicht deponiert werden muß.

Die Lösung dieser Aufgabe erfolgt erfindungsgemäß dadurch, daß die Jarosit-haltigen Rückstände und Zinksulfid enthaltende Konzentrate in verdünnter Schwefelsäure mit einem Gehalt von 40 bis 100 g/l freier Schwefelsäure in einem Autoklaven bei einem Sauerstoff-Partialdruck von mindestens 1 000 kPa und einer

2

Temperatur von 130 bis 170°C gerührt werden, der Eisen- und Zinkgehalt des Rückstandes und des Zinksulfid enthaltenden Konzentrates weitgehend in Lösung gebracht werden, nach Entspannung eine Trennung in Lösung und Feststoff erfolgt, die Lösung in den Laugungskreislauf einer Zinkelektrolyse mit Fällung des Eisens in Form von Hämatit geleitet wird, aus dem Feststoff der elementare Schwefel abgetrennt wird und der Hämatit-Rückstand einer Weiterverwendung zugeführt wird.

Zinksulfid enthaltende Konzentrate sind Zinkblende-Konzentrate, sulfidische Zink-Blei-Konzentrate und Mischungen von beiden Konzentraten.

Der Gehalt an freier Schwefelsäure in der verdünnten Schwefelsäure bezieht sich auf den Gehalt an freier Schwefelsäure nach Beendigung der Reaktion. Der anfängliche Gehalt an freier Schwefelsäure wird entsprechend dem Verbrauch an Schwefelsäure während der Reaktion höher eingestellt. Der Endgehalt an freier Schwefelsäure wird so hoch eingestellt, daß er im Zustandsdiagramm für das System $Fe_2O_3$-$SO_3$-$H_2O$ außerhalb des Stabilitätsbereiches von Eisenverbidungen im Lösungsbereich liegt. Die Verhältnisse im System $Fe_2O_3$-$SO_3$-$H_2O$ sind in TMS Paper Selection, Paper No. A73-11 und in den Figuren der DE-AS 24 01 768 dargestellt. Der Gesamtdruck im Autoklaven setzt sich zusammen aus dem der Temperatur entsprechenden Wasserdampfdruck und dem Sauerstoff-Partialdruck. Die nach der Entspannung und Abtrennung vom ungelösten Feststoff anfallende Lösung enthält das Zink und das Eisen und wird in den Laugungskreislauf einer Zinkelektrolyse geleitet, bei der die Fällung des Eisens in Form von Hämatit erfolgt. Eine solche Zinkelektrolyse ist in der DE-OS 36 34 359 beschrieben. Aus dem ungelösten Feststoff der Drucklaugung wird der elementare Schwefel z.B. durch Flotation abgetrennt. Der verbleibende Rückstand besteht im wesentlichen aus unlöslichen Bestandteilen des Zinksulfid enthaltenden Konzentrates und der Jarosit-haltigen Rückstände, wie Blei, Silber, Kieselsäure usw. Dieser sogenannte Blei-Silber-Rückstand kann zur Weiterverwendung an die Bleiindustrie abgegeben werden. Die Jarosit-haltigen Rückstände und Zinksulfid enthaltende Konzentrate werden bevorzugt in Zellensäure aus der Zinkelektrolyse suspendiert und die Suspension dann in den Autoklaven eingeleitet. Die nach der Drucklaugung erhaltene Lösung enthält z.B. 80 bis 120 g/l Zink, 15 bis 30 g/l Eisen überwiegend in dreiwertiger Form sowie andere in Lösung gegangene Bestandteile der Ausgangsstoffe wie Kupfer, Kadmium, Mangan, Magnesium und Alkalien. Sie wird nach Einführung in den Laugungskreislauf der Zinkelektrolyse in bekannter Weise in einer Reduktionsstufe mit Zinkblende-Konzentrat oder Schwefeldioxid versetzt, um das dreiwertige Eisen zur zweiwertigen Stufe zu reduzieren. Nach Abtrennung des bei der Reduktion mit Zinkblende-Konzentrat verbleibenden Rückstandes wird die Lösung in einer Neutralisationsstufe mit Zink-Röstblende oder Zinkoxiden versetzt, um die freie Schwefelsäure abzubauen. Nach Abtrennen des Neutralisationsrückstandes wird die Lösung in bekannter Weise der Hämatitfällung unterzogen. Diese erfolgt im Autoklaven bei Temperaturen von 180 bis 200°C in oxidierender Atmosphäre, wobei das Eisen in Form von Hämatit mit etwa 58 bis 60 % Fe ausfällt. Der Hämatit wird abgetrennt, entwässert und - ggf. nach einer weiteren Reinigungsstufe - einer Weiterverwendung zugeführt.

Eine vorzugsweise Ausgestaltung besteht darin, daß das Mischungsverhältnis von Jarosit-haltigen Rückständen zu Zinksulfid enthaltendem Konzentrat 1:10 bis 1:1 beträgt. Dieser Bereich ergibt gute Ergebnisse und erlaubt einen flexiblen Einsatz des Jarosit-haltigen Rückstandes.

Eine vorzugsweise Ausgestaltung besteht darin, daß die verdünnte Schwefelsäure einen Gehalt von 50 bis 80 g/l freie Schwefelsäure hat. Dieser Bereich ergibt besonders gute Betriebsergebnisse.

Eine vorzugsweise Ausgestaltung besteht darin, daß der Sauerstoff-Partialdruck im Autoklaven 1 100 bis 1 300 kPa beträgt. In diesem Bereich werden sehr gute Ausbeuten erzielt.

Eine vorzugsweise Ausgestaltung besteht darin, daß die Behandlungszeit im Autoklaven 30 bis 180 Minuten beträgt. Bei höheren Drücken und Temperaturen im Autoklaven liegt die Behandlungszeit im unteren Bereich und bei niedrigeren Temperaturen und Drücken im oberen Bereich. Diese Behandlungszeit führt zu guten Ausbeuten.

Eine vorzugsweise Ausgestaltung besteht darin, daß die Temperatur im Autoklaven 145 bis 155°C beträgt. Dieser Temperaturbereich ergibt gute Ausbeuten bei relativ geringem energetischen und apparativen Aufwand.

Eine vorzugsweise Ausgestaltung besteht darin, daß die nach Entspannung und Trennung erhaltene Lösung in den Laugungskreislauf der Zinkelektrolyse nach der heißen sauren Laugung eingesetzt wird. Bei einer Zinkelektrolyse, die sowohl mit Röstung von Zinkblende-Konzentrat und Laugung des Röstgutes als auch Drucklaugung von Zinkblende-Konzentrat arbeitet, ergibt der Einsatz der Lösung aus der Drucklaugung an dieser Stelle besonders gute und wirtschaftliche Bedingungen.

Ausführungsbeispiele

Der Jarosit und die Zinksulfid enthaltenden Konzentrate wurden mit 3,5 l Zink-Zellensäure aus einer Zinkelektrolyse gemischt.
Die Zink-Zellensäure hatte folgende Zusammensetzung:

3

```
55     g/l Zn            0,01 g/l Fe              0,09 g/l K
0,6 g/l Na          198     g/l freie H₂SO₄
```

Die Suspension wurde in einen 5 l-Laborautoklaven gefüllt. Der Feststoff wurde durch Rühren mit 2 000 U.p.m. in der Schwebe gehalten. In die Suspension wurde Sauerstoff eingeleitet. Während der Reaktion wurde ein Sauerstoff-Partialdruck von 1 100 kPa eingehalten. Die Suspension wurde auf 150°C erhitzt und 1,5 h bei dieser Temperatur belassen. Danach wurde sie auf 80°C abgekühlt und der Feststoff durch Filtration von der Lösung getrennt, gewaschen und getrocknet.

Beispiel 1

800 g Jarosit (Trockengewicht) mit der Zusammensetzung

```
28,9 % Fe          6,5  % Zn          3,7 % Pb
1,7 % Al₂O₃        4,6  % SiO₂        0,3 % Cu
0,1 % Cd           0,14 % Na          0,6 % K
1,4 % NH₃          10,5 % S
```

wurden ohne Zusatz von Zinksulfid enthaltendem Konzentrat eingesetzt. Zusammensetzung des Feststoffs nach dem Druckaufschluß:

```
26,4 % Fe          2,2 % Zn           6,3 % Pb
1,6 % Al₂O₃        6,6 % SiO₂         0,1 % Cu
0,2 % Cd
```

Zusammensetzung der Lösung nach dem Druckaufschluß:

```
67     g/l Zn           30,3 g/l Fe          1,9 g/l Al₂O₃
0,4 g/l SiO₂        0,5 g/l Cu           0,1 g/l Cd
95     g/l freie H₂SO₄
```

Aus dem eingesetzten Jarosit gingen beim Aufschluß nur etwa 45 % des Eisens in Lösung. Zink, das im Jarosit nicht fest gebunden ist, sondern als Zinksulfat aus anhaftender Mutterlauge oder in Form anderer überwiegend säurelöslicher Verbindungen vorliegt, löste sich dagegen zu 80 %.

Beispiel 2

110 g Jarosit (Trockengewicht) mit der in Beispiel 1 angegebenen Zusammensetzung wurden mit 450 g eines eisen- und bleiarmen Zinkblende-Konzentrats mit der Zusammensetzung

```
61,5 % Zn           1,9 % Fe            0,7  % Pb
0,2  % Al₂O₃        0,8 % SiO₂         <0,10 % Cu
0,11 % Cd           0,01 % Na           0,04 % K
33,2 % Sulfid-S
```

EP 0 428 194 B1

vermischt und eingesetzt.
Zusammensetzung des Feststoffs nach dem Druckaufschluß:

```
4,0 % Zn              0,8 % Fe              4,5 % Pb
0,4 % Al₂O₃           4,3 % SiO₂            <0,1 % Cu
0,1 % Cd              65,1 % Elementar-S
```

Zusammensetzung der Lösung nach dem Druckaufschluß:

```
134    g/l Zn         9,8  g/l Fe3⁺         1,3 g/l Fe2⁺
  0,6  g/l Al₂O₃      0,2 g/l SiO₂          0,5 g/l Na
  0,14 g/l K          0,08 g/l Cu           0,1 g/l Cd
 74    g/l H₂SO₄
```

Im Gegensatz zu Beispiel 1 hatte sich fast das gesamte Eisen aus dem Konzentrat und dem Jarosit gelöst, wie die nachstehende Bilanz zeigt:

```
Fe-Eintrag über Konzentrat              8,6 g
Fe-Eintrag über Jarosit                31,8 g
                                       ------
            Gesamteintrag              40,4 g

Fe-Austrag im Rückstand                 1,4 g  =   3,5 %
Fe-Austrag in der Lösung               39,0 g  =  96,5 %
                                       ------
                                       40,4 g
```

Das Zinkausbringen in der Lösung betrug 97 %.

Beispiel 3

Der Versuch aus Beispiel 2 wurde mit anderen Mengenverhältnissen wiederholt.
Es wurden 179 g Jarosit mit 417 g Zinkblende-Konzentrat (jeweils Trockengewichte) eingesetzt.
Zusammensetzung des Feststoffs nach dem Druckaufschluß:

```
5,0 % Zn              0,6 % Fe              5,9 % Pb
0,2 % Al₂O₃           6,4 % SiO₂            <0,1 % Cu
0,2 % Cd              56,2 % Elementar-S
```

Zusammensetzung der Lösung nach dem Druckaufschluß:

```
128    g/l Zn         15,3 g/l Fe3⁺         1,3 g/l Fe2⁺
  0,9 g/l Al₂O₃       0,2 g/l SiO₂          69   g/l H₂SO₄
```

Auch bei diesem Versuch wurden mehr als 95 % des Eisens und des Zinks gelöst.

5

Beispiel 4

Der Versuch aus Beispiel 2 wurde mit anderen Mengenverhältnissen wiederholt.
Es wurden 298 g Jarosit mit 346 g Zinkblende-Konzentrat (jeweils Trockengewichte) eingesetzt.
Zusammensetzung des Feststoffs nach dem Druckaufschluß:

```
4,8 % Zn                1,3 % Fe              7,2 % Pb
0,1 % Al₂O₃             8,7 % SiO₂            <0,1 % Cu
0,1 % Cd               41,7 % Elementar-S
```

Zusammensetzung der Lösung nach dem Druckaufschluß:

```
118   g/l Zn        23,4 g/l Fe3⁺         1,8 g/l Fe2⁺
  1,2 g/l Al₂O₃      0,1 g/l SiO₂        69   g/l H₂SO₄
```

Auch bei diesem Versuch, der in der eingesetzten Mischung 46 % Jarosit enthielt, gingen mehr als 95 % des Eisens und des Zinks in Lösung.

Beispiel 5

Es wurde Jarosit mit der im Beispiel 1 angegebenen Zusammensetzung mit einem Zinkblende-Konzentrat mit höherem Eisen- und Bleigehalt vermischt.
Das Zinkblende-Konzentrat hatte folgende Zusammensetzung:

```
49,1  % Zn        9,1  % Fe        2,4  % Pb
 0,7  % Al₂O₃     3,0  % SiO₂      0,09 % Cu
 0,14 % Cd        0,04 % Na        0,07 % K
30,5  % Sulfid-S
```

Das Eisen lag im Konzentrat zum größeren Teil als Pyrit vor.
110 g Jarosit (Trockengewicht) wurden mit 450 g Zinkblende-Konzentrat (Trockengewicht) eingesetzt.
Zusammensetzung des Feststoffs nach dem Druckaufschluß:

```
4,1 % Zn          2,1 % Fe          8,1 % Pb
1,2 % Al₂O₃       9,1 % SiO₂        <0,1 % Cu
0,1 % Cd         58,0 % Elementar-S
```

Zusammensetzung der Lösung nach dem Druckaufschluß:

```
117   g/l Zn      18,2 g/l Fe3⁺      1,5  g/l Fe2⁺
  0,8 g/l Al₂O₃    0,2 g/l SiO₂      0,7  g/l Na
  0,16 g/l K       0,2 g/l Cu        0,16 g/l Cd
 71   g/l H₂SO₄
```

Auch mit diesem Zinkblende-Konzentrat konnte der Jarosit weitgehend aufgeschlossen werden. Es gingen aus dem Jarosit und dem Konzentrat insgesamt 95 % des eingetragenen Eisens und 97 % des Zinks in Lösung.

6

EP 0 428 194 B1

Beispiel 6

362 g Jarosit (Trockengewicht) wurden mit 311 g Zinkblende-Konzentrat (Trockengewicht) der Zusammensetzung gemäß Beispiel 5 eingesetzt.
Zusammensetzung des Feststoffs nach dem Druckaufschluß:

```
5,9 % Zn              11,3 % Fe              9,4 % Pb
0,8 % Al₂O₃            9,6 % SiO₂            <0,1 % Cu
0,3 % Cd             35,5 % Elementar-S
```

Zusammensetzung der Lösung nach dem Druckaufschluß:

```
102   g/l Zn         30,0 g/l Fe3⁺          0,6 g/l Fe2⁺
1,5 g/l Al₂O₃         0,2 g/l SiO₂          64   g/l H₂SO₄
```

Bei diesem Versuch reichte die Zinkblende-Konzentrat-Menge offensichtlich nicht aus (die Mischung enthielt 54 % Jarosit und 46 % Zinkblende-Konzentrat), um den Jarosit vollständig aufzuschließen. Von der insgesamt eingesetzten Eisenmenge gingen 81 % in Lösung, 19 % blieben im Rückstand. Zink ging zu 93 % aus dem Jarosit und dem Konzentrat in Lösung.

Beispiel 7

110 g Jarosit (Trockengewicht) mit der in Beispiel 1 angegebenen Zusammensetzung wurden mit 450 g (Trockengewicht) eines Zink-Blei-Mischkonzentrates mit der Zusammensetzung

```
30,8  % Zn           15,4  % Fe            12,5  % Pb
 0,8  % Al₂O₃          4,2  % SiO₂           0,35 % Cu
 0,06 % Cd            0,02 % Na             0,09 % K
25,2  % Sulfid-S
```

vermischt und eingesetzt.
Zusammensetzung des Feststoffs nach dem Druckaufschluß:

```
1,9 % Zn              3,7 % Fe             26,4 % Pb
1,2 % Al₂O₃           9,6 % SiO₂            0,1 % Cu
<0,1 % Cd            35,4 % Elementar-S
```

Zusammensetzung der Lösung nach dem Druckaufschluß:

```
97   g/l Zn          25,1 g/l Fe3⁺         1,4  g/l Fe2⁺
0,8 g/l Al₂O₃         0,2 g/l SiO₂          0,8  g/l Na
0,2 g/l K            0,5 g/l Cu            0,12 g/l Ca
78   g/l H₂SO₄
```

Auch in Gegenwart von Zink-Blei-Mischkonzentrat läßt sich Jarosit aufschließen, wie die nachstehende Bilanz der Eisenmengen zeigt:

7

```
Fe-Eintrag über Konzentrat           69,3 g

Fe-Eintrag über Jarosit              31,8 g
                                     -------
                    Gesamteintrag   101,1 g

Fe-Austrag im Rückstand              8,4 g  =    8,3 %

Fe-Austrag in der Lösung            92,7 g  =   91,7 %
                                     -------
                                    101,1 g
```

Das Zink-Ausbringen in der Lösung betrug 97 %.

Beispiel 8

110 g Jarosit (Trockengewicht) mit der in Beispiel 1 angegebenen Zusammensetzung wurden mit 110 g (Trockengewicht) Zink-Blei-Mischkonzentrat der in Beispiel 7 angegebenen Zusammensetzung sowie mit 340 g (Trockengewicht) Zinkblende-Konzentrat der Zusammensetzung

| | | |
|---|---|---|
| 49,1 % Zn | 9,1 % Fe | 2,4 % Pb |
| 0,7 % $Al_2O_3$ | 3,0 % $SiO_2$ | 0,09 % Cu |
| 0,14 % Cd | 0,04 % Na | 0,07 % K |
| 30,5 % Sulfid-S | | |

vermischt und eingesetzt.

Zusammensetzung des Feststoffs nach dem Druckaufschluß:

| | | |
|---|---|---|
| 3,3 % Zn | 2,5 % Fe | 13,7 % Pb |
| 1,1 % $Al_2O_3$ | 9,9 % $SiO_2$ | <0,1 % Cu |
| 0,1 % Cd | 51,9 % Elementar-S | |

Zusammensetzung der Lösung nach dem Druckaufschluß:

| | | |
|---|---|---|
| 112 g/l Zn | 20,1 g/l $Fe3^+$ | 1,2 g/l $Fe2^+$ |
| 0,8 g/l $Al_2O_3$ | 0,2 g/l $SiO_2$ | 82 g/l $H_2SO_4$ |

Eisenbilanz:

```
Fe-Eintrag über Zinkblende-Konzentrat    30,9 g
Fe-Eintrag über Zn-Pb-Mischkonzentrat    16,9 g
Fe-Eintrag über Jarosit                  31,8 g
                                         ------
                    Gesamteintrag        79,6 g

Fe-Austrag im Rückstand                   4,8 g  =   6,0 %
Fe-Austrag in der Lösung                 74,8 g  =  94,0 %
                                         ------
                                         79,6 g
```

Das Zink-Ausbringen in der Lösung betrug 97 %.

Die Vorteile der Erfindung bestehen darin, daß Jarosit-haltige Rückstände in Verbindung mit einer bestehenden Zinkelektrolyseanlage, die nach dem Hämatitverfahren arbeitet und über Einrichtungen zur Direktlaugung von Zinksulfid enthaltenden Konzentraten verfügt, mit relativ geringem Energieaufwand und ohne zusätzlichen oder mit relativ geringem apparativen Mehraufwand verarbeitet werden können. Während es nicht möglich ist, Jarosit-Schlämme in dem für die Hämatitfällung aus Zink-Eisen-Sulfatlösungen benutzten Autoklaven unter den üblichen Bedingungen der Hämatitfällung aufzuschließen, wird durch die erfindungsgemäße Arbeitsweise bei niedrigeren Temperaturen und Drücken ein weitgehender Aufschluß erzielt. Die Jarosithaltigen Rückstände werden in ein Produkt umgewandelt, das weiterverwendet werden kann oder das - falls erforderlich - ohne Problem deponiert werden kann.

**Patentansprüche**

1.  Verfahren zur Aufarbeitung von Jarosit-haltigen Rückständen, wobei die Rückstände in schwefelsaurem Medium unter erhöhter Temperatur und erhöhtem Druck behandelt werden, dadurch gekennzeichnet, daß die Jarosit-haltigen Rückstände und Zinksulfid enthaltende Konzentrate in verdünnter Schwefelsäure mit einem nach Beendigung der Behandlung verbleibenden Gehalt von 40 bis 100 g/l freier Schwefelsäure in einem Autoklaven bei einem Sauerstoff-Partialdruck von mindestens 1 000 kPa und einer Temperatur von 130 bis 170°C gerührt werden, der Eisen- und Zinkgehalt des Rückstandes und des Zinksulfid enthaltendem Konzentrates weitgehend in Lösung gebracht werden, nach Entspannung eine Trennung in Lösung und Feststoff erfolgt, die Lösung in den Laugungskreislauf einer Zinkelektrolyse mit Fällung des Eisens in Form von Hämatit geleitet wird, aus dem Feststoff der elementare Schwefel abgetrennt wird und der Rückstand einer Weiterverwendung zugeführt wird.

2.  Verfahren nach Anspruch 1, dadurch gekennzeichnet, daß das Mischungsverhältnis von Jarosit-haltigen Rückständen zu Zinksulfid enthaltendem Konzentrat 1:10 bis 1:1 beträgt.

3.  Verfahren nach Anspruch 1 oder 2, dadurch gekennzeichnet, daß die verdünnte Schwefelsäure einen Gehalt von 50 bis 80 g/l freie Schwefelsäure hat.

4.  Verfahren nach einem der Ansprüche 1 bis 3, dadurch gekennzeichnet, daß der Sauerstoff-Partialdruck im Autoklaven 1 100 bis 1 300 kPa beträgt.

5.  Verfahren nach einem der Ansprüche 1 bis 4, dadurch gekennzeichnet, daß die Behandlungszeit im Autoklaven 30 bis 180 Minuten beträgt.

6.  Verfahren nach einem der Ansprüche 1 bis 5, dadurch gekennzeichnet, daß die Temperatur im Autoklaven 145 bis 155°C beträgt.

7.  Verfahren nach einem der Ansprüche 1 bis 6, dadurch gekennzeichnet, daß die nach Entspannung und Trennung erhaltene Lösung in den Laugungskreislauf der Zinkelektrolyse nach der heißen sauren Laugung eingesetzt wird.

## Claims

1. A method of reprocessing jarosite-containing residues, which are treated in a sulfuric acid medium at an elevated temperature and under a superatmospheric pressure, characterized in that the jarosite-containing residues and concentrates which contain zinc sulfide are stirred in dilute sulfuric acid, which contains 40 to 100 g/l free sulfuric acid after the end of the reaction, in an autoclave under an oxygen partial pressure of at least 1,000 kPa and at a temperature from 130 to 170 C, the iron contents and the zinc contents of the residue and of the concentrate which contains zinc sulfide are substantially dissolved, flashing is effected and is succeeded by a separation of solution and solids, the solution is fed to the leaching circuit of a plant for the electrolytic production of zinc with precipitation of iron as hematite, the elemental sulfur is separated from the solids and the hematite residue is supplied to a further utilization.

2. A method according to claim 1, characterized in that the mixing ratio of jarosite-containing residues to concentrate which contains zinc sulfide is between 1:10 and 1:1.

3. A method according to claim 1 or 2, characterized in that the dilute sulfuric acid contains 50 to 80 g/l free sulfuric acid.

4. A method according to any of claims 1 to 3, characterized in that the oxygen partial pressure in the autoclave is from 1,100 to 1,300 kPa.

5. A method according to any of claims 1 to 4, characterized in that the treating time in the autoclave amounts to 30 to 180 minutes.

6. A method according to any of claims 1 to 5, characterized in that the temperature in the autoclave is from 145 to 155 °C.

7. A method according to any of claims 1 to 6, characterized in that the solution which is available after the flashing and separation is fed to the leaching circuit of the plant for the electrolytic production of zinc at a point succeeding the hot acid leaching.

## Revendications

1. Procédé de traitement de résidus contenant de la jarosite, qui consiste à traiter les résidus en milieu acide sulfurique à haute température et sous haute pression, caractérisé en ce qu'il consiste à brasser les résidus contenant de la jarosite et des concentrés contenant du sulfure de zinc dans de l'acide sulfurique dilué ayant une teneur restante, après achèvement du traitement, de 40 à 100 g/l d'acide sulfurique libre dans un autoclave sous une pression partielle d'oxygène d'au moins 1000 kPa et à une température de 130 à 170°C, à mettre les teneurs en fer et en zinc du résidu et du concentré contenant du sulfure de zinc essentiellement en solution, à effectuer après une détente une séparation en une solution et en une matière solide, à envoyer la solution dans le circuit de lixiviation d'une électrolyse de zinc avec précipitation du fer sous forme d'hématite, à séparer le soufre élémentaire de la matière solide et à envoyer le résidu à une réutilisation.

2. Procédé suivant la revendication 1, caractérisé en ce que le rapport de mélange des résidus contenant de la jarosite au concentré contenant du sulfure de zinc est compris entre 1:10 et 1:1.

3. Procédé suivant la revendication 1 ou 2, caractérisé en ce que l'acide sulfurique est dilué à une teneur en acide sulfurique libre de 50 à 80 g/l.

4. Procédé suivant l'une des revendications 1 à 3, caractérisé en ce que la pression partielle d'oxygène dans l'autoclave est comprise entre 1100 et 1300 kPa.

5. Procédé suivant l'une des revendications 1 à 4, caractérisé en ce que la durée de traitement dans l'autoclave est comprise entre 30 et 180 minutes.

6. Procédé suivant l'une des revendications 1 à 5, caractérisé en ce que la température dans l'autoclave est comprise entre 145 et 155°C.

7. Procédé suivant l'une des revendications 1 à 6, caractérisé en ce que la solution obtenue après détente et séparation est introduite dans un circuit de lixiviation de l'électrolyse de zinc après la lixiviation acide à chaud.